# EUROPEAN PATENT APPLICATION

(11) **EP 1 106 652 A1**
(43) Date of publication of application: **13.06.2001**
(21) Application number: 99126178.5
(22) Date of filing: 29.12.1999
(51) Int. Cl.: C08L 77/00

(54) **Polyamide resin composition**

(30) Priority: 06.12.1999 KR 9955247
(71) Applicant: HYUNDAI MOTOR COMPANY, Jongro-ku, Seoul 110-793 (KR); Alliedsignal Korea Ltd., Seoul (KR)
(72) Inventor: Seo, Jung Ho, Ulsan (KR); Lee, Chong Jin, Songpa-ku, Seoul (KR); Lee, Sang Rok, Daejeon (KR); Lee, Seung Joon, Daejeon (KR)
(74) Representative: TER MEER STEINMEISTER & PARTNER GbR

(57) **Abstract**

The present invention relates to a polyamide resin composition and more particularly, the polyamide resin composition comprising 50 ∼ 95 wt.% of polyamide resin, 1 ∼ 45 wt.% of impact adjuvant such as ethylene/propylene monomers, 0.1 ∼ 20 wt.% of a nylon plasticizer such as lactam and sulfonamide type, 0.01 ∼ 5 wt.% of a nylon thickener and 0.5 ∼ 10 wt.% of ethylene/vinyl acetate copolymer which can be utilized in a fuel tubing applications of an automobile for excellent gasoline resistance, low-temperature impact resistance and reasonable price.

## Description

### BACKGROUND OF THE INVENTION

### Field of the Invention

The present invention relates to a polyamide resin composition, and more particularly to a polyamide resin composition which can be utilized in a fuel tubing system of an automobile because of its excellent gasoline resistance and low-temperature impact resistance.

Generally, polyamide resins have a number of excellent properties of mechanical strength, abrasion resistance, heat resistance, chemical resistance, electrical insulation and electric arc resistance so that they can be utilized in producing resin articles of a variety of industrial goods, such as exterior and interior parts of automobiles, electronic parts, electric parts, sports goods and construction materials. Polyamide resins in hose and tubing applications, however, have been limited to some extent due to their deficiencies in compatibility, flexibility, viscosity and processability with rubbers.

Polyamide resin compositions containing a nitrile rubber had been used in a fuel system of an automobile but they had serious drawbacks such as poor impact resistance at low temperature, poor appearance of molded products and an extremely high price.

US 4, 803, 247 discloses a use of polyamide resins in hose and tubing applications and more particularly, polyamide resin compositions having nitrile rubber and copolymer of ethylene and w-olefin therein. USP 5, 387, 647 discloses thermoplastic molding compounds of polyamide and hydrogenated nitrile rubber and USP 4, 356, 286 discloses thermoplastic elastomer blends of a nitrile rubber and a crystalline polyamide mixture. And also USP 5, 919, 865 discloses polyamide compositions including a polyamide, ethylene/propylene rubber (EPR), ethylene/propylene/diene monomers rubber (EPDM) and SEBS rubber (SEBS-g-MA) grafted with maleic anhydride. Thermoplastic resin composition and impact modification of thermoplastics are also disclosed in USPs 5, 559, 185 and 5, 688, 866.

These polyamide resin compositions have been improved in flexibility and impact resistance; however, they still have disadvantages in that they are poor in the tubing applications of the fuel system of automobiles in terms of appearance and uniform thickness of parts, molding processability, homogeneous rubber dispersion and the difficulty in obtaining homogeneous polyamide resin compositions in the extrusion process.

### SUMMARY OF THE INVENTION

Accordingly, in order to improve the drawbacks of the conventional polyamide resins, it is necessary to select an appropriate rubber which is well dispersed, to use of a nylon thickener having melt index of below 1.5 to provide uniform molding processability and thickness, to modify extrusion conditions to have maximum dispersion of rubber and to use a nylon plasticizer to obtain compatible flexibility. Since excessive nylon plasticizer use might cause of the surface whitening of parts, it is required to use an appropriate type and quantity of a plasticizer to avoid the above-mentioned phenomenon. Therefore, the present invention is aiming at providing a polyamide resin composition having excellent gasoline resistance, low-temperature impact resistance, modulus, elongation, appearance and flexibility as well as with a reasonably low market price.

### Detailed Description of the Invention

The present invention is characterized by a polyamide resin composition comprising 50 ~ 95 wt.% of polyamide resin, 1 ~ 45 wt.% of impact adjuvant, 0.1 ~ 20 wt.% of a nylon plasticizer, 0.01 ~ 5 wt.% of a nylon thickener and 0.5 ~ 10 wt.% of ethylene/vinyl acetate (EVA).

The detailed description of the present invention is given hereunder.

The polyamide resin in the present invention is a polyamide having lactam with bigger than 3-membered ring, ω-aminocarboxylic acid, dicarboxylic acid and diamine. These components may be used either individually or in the form of mixtures of two or more components, and either homopolyamides or copolyamides. These polyamides are semi-crystalline and/or non-crystalline.

In particular, polyamides can be obtained by a condensation reaction of an aminocaboxylic acid or by a polymerization of lactam. Examples of lactams and aminocarboxylic acids include ε-caprolactam, aminocaproic acid, enantholactam, 7-aminoheptanoic acid, 9-aminononanoic acid, 11-aminoundecanoic acid and α-piperidone. Polyamides can be also obtained by a condensation reaction between a diamine and a diacrboxylic acid. Examples of diamines include tetramethylene diamine, hexamethylene diamine, nonamthylene diamine, decamethylene diamine, undecamethylene diamine, dodecamethylene diamine, p-aminoaniline and m-xlylene diamine. Examples of dicarboxylic acids include adipic acid, sebacic acid, dodecanoic dibasic acid, glutaric acid, terephthalic acid, 2-methylterephthalic acid, isophthalic acid and naphthalenedicarboxylic acid. Multifuctional compounds such as trimetic acid having trifuctional groups can be used instead of the above-mentioned dicarboxylic acids or diamines within 5 molar %. Further, small amount of nylon monomer may be used to increase flexibility and viscosity during the polymerization.

Examples of these polyamides include nylon 6, 7, 8, 10, 2, 66, 69, 610, 611, 612, 6T, 6/66, 6/12 and 6/6T, preferably nylon 6, 66, 6/66 and a combination thereof in any mixing ratio.

In the polymerization, any method of polymerization such as anion polymerization, bulk melt polymerization, solution polymerization, melt polymerization using salts and interfacial polymerization can be applied and polyamide coplymers polymerized by a condensation reaction using at least two or three monomer units can be used regardless of its wt %.

In order to improve the weight, strength, heat resistance and impact resistance of a polyamide resin composition, polyamide, polysulfone, polyethersulfone, polyphenylene sulfide, polyphenylene ether, polyphenylene oxide, high impact polystyrene, acrylonitril/butadiene/styrene copolymer, acrylonitril/ethylenepropylene/ styrene, acrylonitril/styrene/arylacrylate, polycarbonate, polyethylenetere phthalate, polybutylenephthalate can be used in the above copolymerization or blending. A compatability agent such as polystyrene grafted with oxazoline and polyolefin grafted with maleic anhydride can be added to impart better properties thereof.

The polyamide resin obtained by the present invention can be used between 50 and 90 wt.% of the total composition, preferably between 65 and 90 wt.%.

The impact adjuvant of the polyamide resin composition can be ethylene/propylene monomers rubber (EPM), ethylene/propylene rubber (EPR), ethylene/propylene/diene monomers rubber (EPDM), arylmetacrylate/butadiene/styrene rubber (MBS), styrene/butadiene/styrene triblock copolymer (SBS triblock copolymer), EPM grafted with maleic anhydride, SBS grafted with maleic anhydride, EPDM grafted with maleic anhydride, all acrylic core-shell type rubber, ethylene/ethylacrylate (EEA), styrene/butadiene rubber (SBR), thermoplastic elastomers and plastomer, preferably EPM, EPDM, EPR, EPM-g-MA, EPR-g-MA. Carboxylic acid or maleic anhydride can be added to improve the properties.

The impact adjuvant in the composition of the present invention can be used between 1 and 45 wt.% of the total compositions, preferably between 10 and 35 wt.%.

A nylon plasticizer used in the composition of the present invention plays a role to improve the flexibility; here, usable plasticizers are not limited to either a lactam type (e.g., caprolactam and lauryllactam) or a sulfonamide type (e.g., *o, p*-toulenesulfonamide). For example, plasticizers of a polymer type such as sulfonamide, trimellitate plasticizer and phthalate, adipate, glycolate and phosphrous type can be also utilized in the composition of polyamide resin.

The plasticizer in the composition of the present invention can be used between 0.1 and 20 wt.% of the total composition, preferably between 5 and 10 wt.%.

A nylon thickener can serve as an appropriate melt index of the resin composition in that the flexibility of overall composition increases as the components of a nylon plasticizers increases while it has a melt index which is inappropriate in the extruded molding and blow molding of tubes. Examples of thickeners include styrene/maleic anhydride resin which is a polymer grafted with maleic anhydride, grafted polyolefin, polymers with similar reaction groups and multifunctional epoxy resins such as cresol novolac epoxy and phenol novolac epoxy.

The thickener in the composition of the present invention can be used between 0.01 and 5 wt.% of the total composition, preferably between 0.1 and 2 wt.%.

EVA can be also used in the composition of the present invention to improve appearance of molded products, elongation and low-temperature impact resistance. It is preferable to use EVA which is a copolymer containing more than 50 wt.% of ethylene and has a melting point in the range of 80 ~ 105°C. Representative examples are ethylene/vinyl acetate copolymer, ethylene/vinyl propionate copolymer, ethylene/methyl metacrylate copolymer, ethylene/ethyl acrylate copolymer and ethylene/*n*-butyl acrylate copolymer, preferably ethylene/vinyl acetate copolymer. Ethylene/vinyl acetate copolymer is usable in commercial products containing various contents of ethylene/vinyl acetate copolymer with broad melting point.

The EVA compounds in the composition of the present invention can be used between 0.5 and 10 wt.% of the total composition, preferably between 0.5 and 5 wt.%.

If desired, various types of additives can be further added alone or in a combination to the composition of the present invention, as long as the desired properties, appearance and/or processability of the present invention are not impaired. Examples of additives include a stabilizer, a light stabilizer, a heat stabilizer, an ultraviolet stabilizer, an anti-additive, a mold release agent, a pigment, a dye, a flame retardant, a textile-reinforced filling agent, and a nucleating agent.

Representative examples of stabilizers include a metal halogen compound such as sodium, lithium or copper, a halogen compound such as chlorine, bromine or the like, a hindered phenol, a phosphorous compound, or hydroquinones.

Examples of ultraviolet stabilizers include resorcinols, salicylates, hindered amines, benzotriazoles and benzophenols.

Examples of an anti-additive and a mold release agent include stearic acids, stearyl alcohols, stearamides, wax, carbonates, titanium dioxides, cadmium sulfides, ultra marine blue and carbon black.

Examples of flame retardants include organic halogen compounds, non-halogen compounds and metal hydroxides.

Examples of reinforcing agents include glass fibers, glass beads, glass flakes, micas, talc, carbon fibers, kaolines, wollastonites, molybdenum disulfides, potassium titanic acids, barium sulfates, electroconductive carbon black and aramid fibers. In the present invention, other additives such as a flame inhibiting agent, a drip inhibiting agent, a magnetizing agent, an EMI shielding agent, an anti-bacterial agent, an anti-microbial agent, a metal deactivating agent, an infra red radiant and a charge inhibiting agent can be used in addition.

The polyamide resin composition of the present invention is blended first with such essential additives as an anti-additive and a stabilizer, melt-kneaded by using a conventional mixing equipment such as a twin-screw extruder, a single-screw extruder, a roll-mill, kneader and banbury mixer, pelleted by a pelletizer, dried sequentially in a dehumidifying dryer, molded in an extruder and measured for properties. The general properties are measured with different sets of revolution speeds of the screw and temperatures of the dehumidifying dryer.

The following examples are intended to be illustrative of the present invention and should not be construed as limiting the scope of this invention defined by the appended claims.

### Example 1-11 and Comparative Example 1

In accordance with the wt.% shown in Table 1, Nylon 6, EPM-g-MA rubber grafted with maleic anhydride, sulfonamide plasticizer (aqueous phase), polymer grafted with maleic anhydride, carbon black master batch were combined for dryblending, melt-kneaded at 240°C by using a twin-screw extruder, pelleted by a pelletizer, dried sequentially in a dehumidifying dryer at 70°C and 90°C, respectively, dried again in a dehumidifying dryer at 70°C for a certain duration of time after changing the speed of revolution and molded in an extruder. In Comparative Example 1, the molding was performed by using an expensive nitrile rubber-reinforced polyamide-6 resin composition.

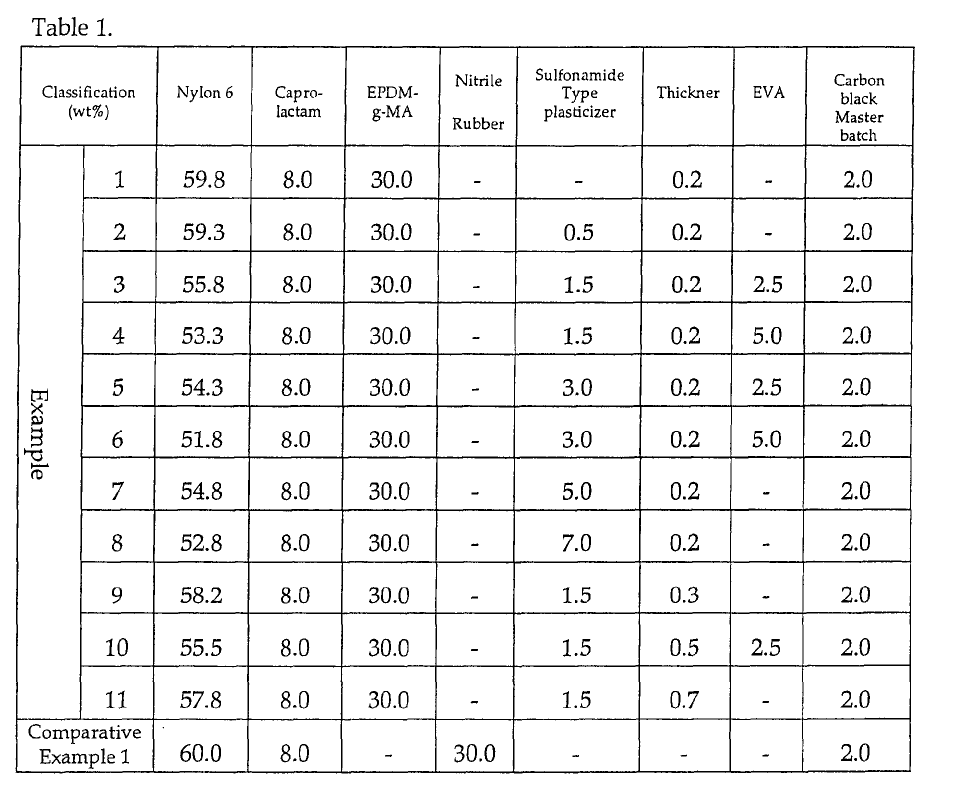

### Experimental Example

Test samples extruded according to the Examples 1-11 and Comparative Example 1 were examined complying with the following standards, and rubbers were made into thin films and the degree of dispersion was observed on a light microscope. Here, the molding processabilities and external appearances were tested based on the following methods.

### [Test Methods]

1) Tensile Strength & Elongation: ASTM D 638, 50mm/min
2) Flexural Rigidity & Flexural Modulus: ASTM D 790, 10mm/min
3) Izod Impact Strength (room temperature & -40°C); ASTM D 256, use Izod Noched test sample with 1/4 inch thickness
4) Melt Index: ASTM D 1238 235°C, 2.16 kgf
5) Gasoline Resistance: measure the Flexural Rigidity & Flexural Modulus (ASTM D 790, 10mm/min) of gasoline after 48 hrs and 96hrs of immersion at 50°C)
6) Examination of External Appearance: Compositions acquired at various speeds of screw revolutions are made into thin films of 0.05 mm thickness to determine the state of appearances in terms of rubber dispersion and the appearance of molding products were determined by naked eye as follows:

Excellent Dispersion, Clean appearance to naked eye: ○
Minute clusters of rubber, Presence of minute projections in molding product: Δ
Chunky rubbers, Presence of minute projections in molding product: X

Table 2 shows the result of general properties of a composition examined after a series of processes (the revolution speed of screw: 250rpm); first pelleted by a pelletizer by using a twin-screw and then dried at 70°C for 5 hr in a dehumidifying dryer. Table 3 shows the result of a resin composition obtained in Example 4, which has equal or better properties than the nitrile rubber-reinforced polyamide-6 resin composition, after experiments regarding general properties and the extrusion of plasticizer with different sets of temperatures of a dehumidifying dryer and time passages (the revolution speed of screw: 250rpm).

Table 4 shows the result of a resin composition obtained in Example 5 on general properties and the extrusion of plasticizer with different sets of temperatures of a dehumidifying dryer and time passages.

Table 5 shows the result of a polyamide resin composition after changing the revolution speed of the screw and made into films with 0.05 mm thickness regarding general properties and the appearance by a microscopic observation (5 hr at 70°C in the dehumidifying dryer).

Table 6 shows the result of polyamide resins obtained from Example 4 and Comparative Example 1, regarding the general properties and whitening phenomenon of test samples after immersing in gasoline of 50°C for 48 hr and 96 hr, respectively.

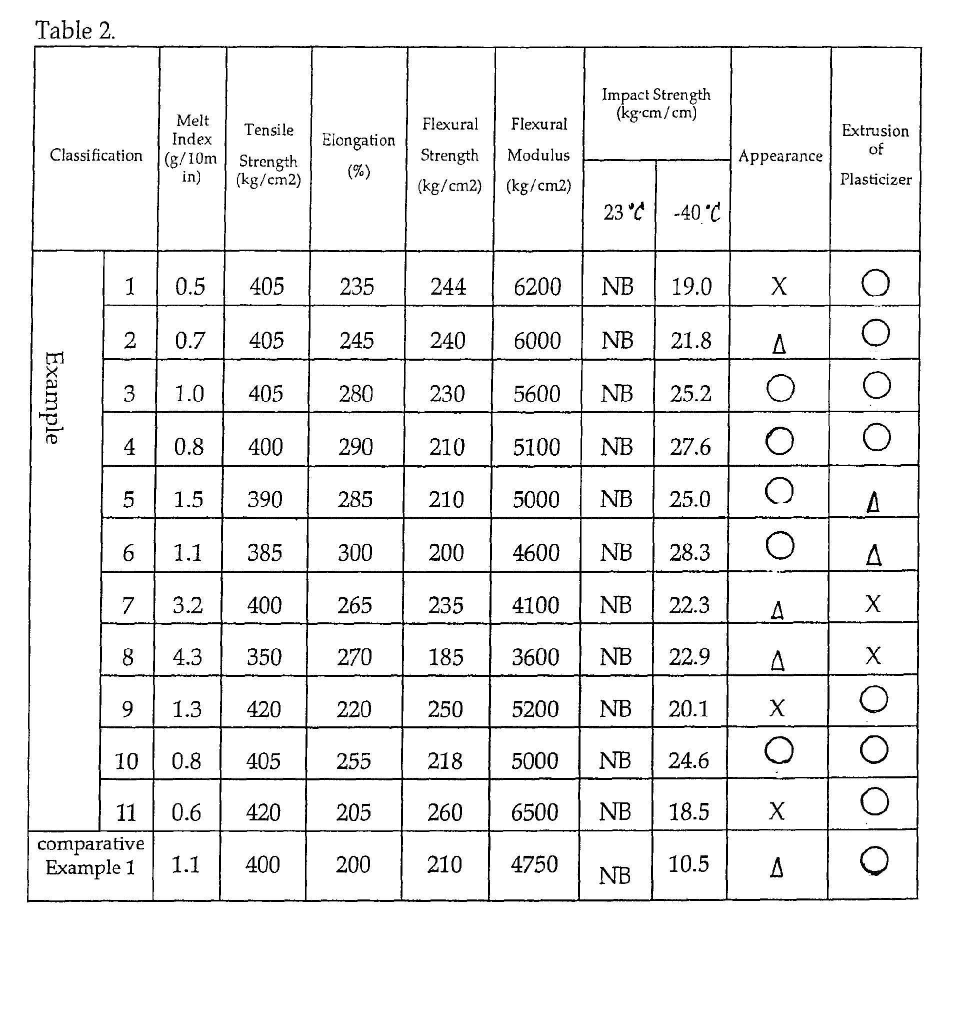

**Table 3.**

| Classification | | Example 4, Dehumidifying Dryer at 90°C | | | Comparative Example 1, Dehumidifying Dryer at 90°C | | |
|---|---|---|---|---|---|---|---|
| | | 3hr | 5hr | 9hr | 3hr | 5hr | 9hr |
| Melt Index (g/10 min) | | 0.9 | 0.8 | 0.8 | 1.3 | 1.1 | 1.1 |
| Tensile Strength (kg/cm²) | | 398 | 400 | 405 | 390 | 400 | 430 |
| Elongation (%) | | 290 | 290 | 280 | 220 | 200 | 195 |
| Flexural Strength (kg/cm²) | | 205 | 210 | 212 | 198 | 210 | 225 |
| Flexural Modulus (kg/cm²) | | 5080 | 5100 | 5110 | 4600 | 4750 | 5150 |
| Impact Strength (kg·cm/cm) | 23°C | NB | NB | NB | NB | NB | NB |
| | -40°C | 27.1 | 27.6 | 27.3 | 10.8 | 10.5 | 10.4 |
| Extrusion of Plasticizer | | ○ | ○ | Δ | ○ | ○ | Δ |

**Table 4.**

| Classification | | Example 5, Dehumidifying Dryer at 90 °C | | | Comparative Example 1, Dehumidifying Dryer at 90°C | | |
|---|---|---|---|---|---|---|---|
| | | 3hr | 5hr | 9hr | 3hr | 5hr | 9hr |
| Melt Index (g/10 min) | | 0.8 | 0.8 | 0.7 | 1.0 | 1.0 | 0.9 |
| Tensile Strength (kg/cm²) | | 410 | 430 | 445 | 405 | 387 | 460 |
| Elongation (%) | | 270 | 255 | 245 | 195 | 190 | 175 |
| Flexural Strength (kg/cm²) | | 218 | 238 | 255 | 210 | 235 | 271 |
| Flexural Modulus (kg/cm²) | | 5150 | 5300 | 5700 | 4900 | 5250 | 5900 |
| Impact Strength (kg· cm/cm) | 23°C | NB | NB | NB | NB | NB | NB |
| | -40°C | 26.2 | 26.0 | 25.4 | 10.7 | 10.5 | 10.4 |
| Extrusion of Plasticizer | | Δ | X | X | X | X | X |

**Table 5.**

| Classification | | Example 4, Number of Screw Revolutions | | | Comparative Example 1 |
|---|---|---|---|---|---|
| | | 150 | 250 | 350 | |
| Melt Index (g/10 min) | | 0.8 | 0.8 | 0.8 | 1.1 |
| Tensile Strength (kg/cm²) | | 400 | 400 | 400 | 390 |
| Elongation (%) | | 250 | 290 | 295 | 200 |
| Flexural Strength (kg/cm²) | | 220 | 210 | 210 | 210 |
| Flexural Modulus (kg/cm²) | | 5200 | 5100 | 5000 | 4750 |
| Impact Strength (kg·cm/cm) | 23°C | NB | NB | NB | NB |
| | -40°C | 26.5 | 27.6 | 27.8 | 10.5 |
| Microscopic Observation | | X | Δ | ○ | Δ |

**Table 6.**

| Classification | Example 4, Dehumidifying Dryer at 90°C | | | Comparative Example 1 | | |
|---|---|---|---|---|---|---|
| | Immediately After Extrusion | 48 hr after Immersion | 96 hr after Immersion | Immediately after Extrusion | 48 hr after Immersion | 96 hr after Immersion |
| Oil Absorption (%) | - | 0.14 | 0.17 | - | 0.12 | 0.15 |
| Flexural Strength (kg/cm²) | 210 | 250 | 255 | 210 | 246 | 250 |
| Flexural Modulus (kg/cm²) | 5100 | 5700 | 5750 | 4750 | 5550 | 5600 |
| Appearance | ○ | ○ | ○ | Δ | Δ | Δ |
| Whitening | None | None | None | None | None | None |

Consequently, the polyamide composition in the present invention obtained during the extrusion process, is shown to be equal or better than the previous nitrile rubber-reinforced polyamide resin compositionsits in terms of appearance, uniform thickness, processabilities, even dispersion of rubber; in particular, the excellent low-temperature impact resistance and appearance of the composition in the present invention enables it to be well-suited to a tube system of an automobile.

## Claims

1. A polyamide resin composition comprising 50 ~ 95 wt.% of a polyamide resin, 1 ~ 45 wt.% of an impact adjuvant, 0.1 ~ 20 wt.% of a nylon plasticizer, 0.01 ~ 5 wt.% of a nylon thickener and 0.5 ~ 10 wt.% of ethylene / vinyl acetate copolymer.

2. The polyamide resin composition according to claim 1, wherein said polyamide resin is the one or mixtures of components selected from a group consisting of nylon 6, nylon 66, nylon 6/66 and a resin having an amide group.

3. The polyamide resin composition according to claim 1, wherein said impact adjuvant is the one or mixtures of components selected from the group consisting of ethylene/propylene rubber, ethylene/propylene monomers rubber, ethylene/propylene/diene terpolymer, ethylene / propylene monomer grafted with maleic anhydride and ethylene/propylene/diene monomer grafted with maleic anhydride.

4. The polyamide resin composition according to claim 1 or claim 3, wherein said impact adjuvant has impact strength of 30 kg^{·}cm/cm at -40° C.

5. The polyamide resin composition according to claim 1, wherein said nylon plasticizer is the one or mixtures of components selected from the group consisting of lactams, sulfonamides, phthalates, adipates, phosphorates and glycolates.

6. The polyamide resin composition according to claim 1, wherein said nylon thickener is a compound or a mixture selected from a group consisting of oligomers and polymers with multi-functional groups having at least an unsaturated carboxylic acid and an acid anhydride group at the terminal of polymers.
